# EUROPEAN PATENT SPECIFICATION

(11) **EP 3 623 180 B1**
(45) Date of publication and mention of the grant of the patent: **05.05.2021**
(21) Application number: 18193760.8
(22) Date of filing: 11.09.2018
(51) Int. Cl.: B60D 1/24, B60D 1/62

(54) **A METHOD AND SYSTEM FOR DETERMINING A STATE OF A TRAILER BEING TOWED BY A VEHICLE**
VERFAHREN UND SYSTEM ZUR BESTIMMUNG DES ZUSTANDS EINES VON EINEM FAHRZEUG GEZOGENEN ANHÄNGERS
PROCÉDÉ ET SYSTÈME PERMETTANT DE DÉTERMINER UN ÉTAT D'UNE REMORQUE TRACTÉE PAR UN VÉHICULE

(43) Date of publication of application: 18.03.2020
(73) Proprietor: Connaught Electronics Ltd., Tuam, County Galway (IE)
(72) Inventor: Finan, Brian, Tuam, County Galway (IE); Moran, Mark, Tuam, County Galway (IE)
(74) Representative: Jauregui Urbahn, Kristian

(56) References cited:
- EP-A1- 1 336 824
- DE-A1-102016 104 729
- US-B2- 9 558 409

## Description

### Field

The present application relates to a method and system for determining a state of a trailer being towed by a vehicle.

### Background

Correct trailer loading is important in the area of vehicle safety. Incorrect trailer loading can affect the performance and safety of a towing vehicle. For example, problems can arise when the load carried by the trailer is in an incorrect location causing an imbalance in the weight of the vehicle/trailer combination and making the load difficult or unsafe to tow. With such an incorrect loading, braking distance, wear and tear on the vehicle steering, suspension and braking system may also be considerably increased.

Also, if a trailer is overloaded, it can be unsafe to tow, as braking capacity and towing ability may not be able to deal with the weight of the trailer being towed, and this can result in a vehicle's brakes failing or clutch burning.

Currently users rely on personal judgement and experience to determine if the trailer is loaded correctly and if they are towing too much weight or not. However, an unnoticed shift in the position of the load being towed by the vehicle may result in dangerous/unsafe driving situations. This situation is likely to happen if the road conditions suddenly change, for instance: going from a straight flat road through sudden corners or sharp inclines/declines.

DE102008045436 discloses detecting an image of a trailer and comparing the image with predetermined reference images, a respective trailer inclination angle being assigned to the predetermined reference images. An inclination angle between a tractor and the trailer is automatically determined dependent upon the comparison of the detected image with the reference images and the reference image inclination angle The document DE 10 2016 104729 A1 discloses a prior art system.

It is desirable to provide an improved system for determining a state of a trailer being towed by a vehicle.

### Summary

Accordingly, in a first aspect the application provides a method operable in a towing vehicle for determining a state of a trailer being towed as detailed in claim 1.

In a further aspect, there is provided a computer program product which when executed on a computing device is arranged to perform the method of claim 1.

In a still further aspect there is provided a weight distribution determination system arranged to perform the steps of claim 1.

Advantageous embodiments are provided in the dependent claims.

This present application provides the user with an indication that the load they have on their trailer may not be safe to tow. Specifically, embodiments use calibration of the vehicle rear and front view image capturing devices to determine the height between each image capturing device and the ground and uses these heights to determine if trailer loading is safe.

As will be understood from the detailed description, this system and method allow the trailer load to be assessed, especially when towing long trailers, which have the potential to carry heavier loads.

### Brief Description Of The Drawings

Figures 1-4 illustrate various states of a trailer being towed by a towing vehicle including a system for determining a state of the trailer according to an embodiment of the invention; and
Figure 5 is a block diagram illustrating a configuration of a system for determining a state of a trailer being towed by a towing vehicle according to an embodiment of the invention.

### Detailed Description

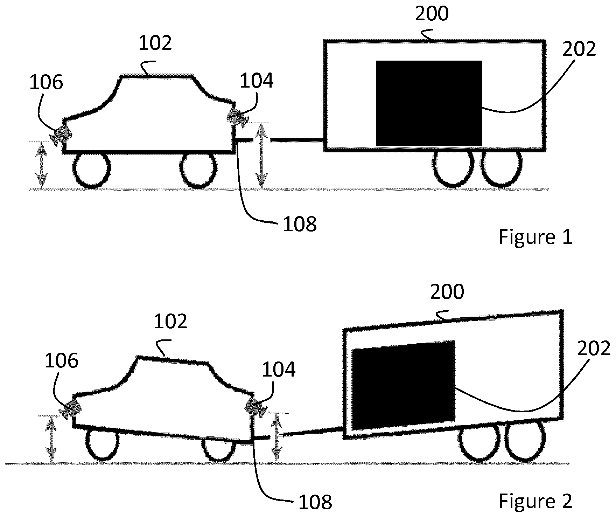

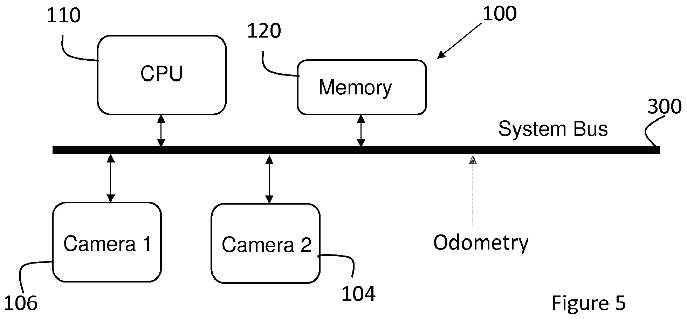

Figures 1 to 4 illustrates a towing vehicle 102 including a system 100, Figure 5, according to an embodiment of the present invention for determining a state of a load 202 being carried by a trailer 200 being towed by the vehicle 102. The vehicle 102 comprises a front facing image capturing device 106 and a rear facing image capturing device 104. Image capturing devices 104, 106 can comprise any type of image capture device. For example, an image capture device may be a camera of the type commonly referred to as a digital camera. Such cameras may be, for example, CMOS cameras, charged coupled device (CCD) cameras and the like. It will be understood that the image capturing device may be able to capture an image in the visible and/or not visible spectrum and the system may use any combination of chromatic or intensity image plane information provided by the image capturing devices.

The front facing image capturing device 106 may be mounted in any desired location on the vehicle for capturing a downward looking plan view of the ground towards the front of the vehicle, or for capturing an image looking in a generally forward direction from the vehicle 102. So for example, while the image capturing device 106, is illustrated mounted at or in the front grille of the vehicle 102, the image capturing device 106 could also be located within an overhead console unit (not shown) located within the cabin of the vehicle or the image capturing device 106 could be located on a forward facing surface of a rear view mirror (not shown).

The rear facing image capturing device 104 may also be mounted in any desired location on the vehicle for capturing a downward looking plan view of the ground towards the rear of the vehicle, or for capturing an image looking in a generally backward direction from the vehicle 102.

Again, while the rear facing image capturing device 104 is shown mounted at a rear panel of the vehicle, the image capturing device 104 could also be mounted inside a rear windscreen, or indeed the image capturing device 104 could comprise one or other of a rear facing wing mirror mounted camera.

In any case, it is desirable that the image capturing devices 104, 106 be longitudinally separated from one another so that any changes in their respective heights from the ground provide an indication of a loading of the trailer 200.

It will also be appreciated that the image capturing devices 104, 106 can be the same or different types of devices.

Typically, image capturing devices are employed in a vehicle to assist with parking and/or autonomous or semi-autonomous driving such as active cruise control and the image capturing devices 104, 106 can comprise such devices or they can comprise dedicated devices for the present system.

It will also be appreciated that the image capturing devices 104, 106 whose heights from the ground provide an indication of a loading of the trailer 200 can be cameras whose images are used to produce views of the environment surrounding a vehicle for display within the vehicle for a user; or the image capturing devices 104, 106 can be devices whose images are solely processed by the vehicle processing systems without being displayed for a vehicle user.

According to an embodiment of the present invention, a processor 110 which is coupled to the rear 104 and front 106 image capturing devices is arranged to determine a weight distribution of the trailer 200 being towed by the vehicle. The processor 110 can comprise a processor normally tasked with parking assist and/or autonomous or semi-autonomous driving such as active cruise control or indeed any other vehicle function; or the processor 110 could comprise a dedicated processor for determining weight distribution of the trailer 200; or indeed the processor 110 could comprise any processor of a multiple processor core within a vehicle control system and which may be available as required to determine the weight distribution of the trailer 200.

In any case, the processor 110 is programmed to process the digital image data representative of the image frames captured by the capturing devices 104, 106 and typically stored in a common memory 120 to determine respective distances of the rear facing image capturing device 104 and the front facing image capturing device 106 from a surface on which the vehicle lies.

Document DE 102016104729, which is incorporated herein by reference, relates to a method for extrinsic calibration of a camera of a vehicle based on at least two images of an environmental region of the vehicle consecutively captured by the camera. In particular, the environmental region forming at least part of the images captured by the devices 104, 106 comprises a road surface over which the vehicle is travelling. In DE 102016104729 height calibration is performed to find the absolute height of each camera from the ground surface, preferably when the speed of the vehicle is known. Typically, this speed information or odometry is available to the processor 110 across a vehicle system bus 300. As will be appreciated the bus 300 can comprise any suitable mechanism for communicating vehicle information from one part of a vehicle to another, for example, a CAN or FlexRay bus.

The method comprises determining at least two first blocks in a first image as first image regions depicting respective road surface areas, identifying two second blocks in at least one second image corresponding to the respective first blocks as second image regions at least partially depicting the road surface area of the corresponding first block, determining respective motion vectors for each pair of the two corresponding blocks. The height of the camera from the ground is determined by analysing the rotation-compensated motion vectors which are derived from the minimisation of a cost function describing a deviation between the motion vectors and a predetermined vector as well as, in some embodiments, using the odometry information acquired across the system bus 300. The derived height of the image capturing devices 104, 106 may be stored as part of the configuration information of the image capturing device in any memory component of the system, the image capturing device or in the memory 120.

The processor 110 is programmed to determine or acquire the configuration information of the front and the rear image capturing device. The configuration information includes camera calibration parameters comprising the distance of the capturing device from the ground, such as "z" coordinate of the capturing device. The processor 110 may be adapted to provide continuous or periodic monitoring of the camera heights during travel to determine if the load being towed on the trailer has suddenly moved of shifted backwards or forwards from its original correct position. The monitoring may be performed at regular time interval within a predetermined time period or in response to a change of the road surface condition or the status of the vehicle. The monitoring may be run as a background service in the operating system of the vehicle.

The distance of the capturing devices 104,106 from the surface on which the vehicle lies may vary depending on the status of a trailer being towed by the towing vehicle. The status of the trailer may change according to the movement of the load within the trailer, for instance when the road conditions suddenly change. For example, the weight of the load 202 carried by the trailer 200 may be unevenly dispersed causing the front of the trailer to rise up or lower towards the ground. The relative movement of the front of the trailer 200 causes a weight load unbalance in the weight of the vehicle/trailer combination. In general, when the front of the trailer moves, the front of the trailer 200 acts on a tow hitch 108 to displace it from its initial height from the ground to a different height. The tow hitch 108, tow pin or any other suitable coupling system couples the front of the trailer 200 with the body of the vehicle 102. Accordingly, the front and/or rear of the vehicle body displaces in response to the movement of the tow hitch 108. Consequently, the rear facing image capturing device and/or the front facing image capturing device displace from their initial distance from the surface on which the vehicle 102 lies according to the movement of the vehicle body.

In an embodiment, the processor 110 is configured to output a value indicative of the state of the towed trailer 200 responsive to one or both of: the distance of the rear image capturing device 104 being outside a first threshold, and the distance of the front image capturing device 106 being outside a second threshold. Thus, if the "z" coordinates change to outside a predefined threshold then it is determined that the trailer 200 has been overloaded or that the balance of weight from front to back is not proportionally correct and, therefore, the load weight is distributed incorrectly.

The camera heights being determined during the monitoring of the rear and front view image capturing device provides a safe solution for the driver to know if the vehicle and trailer are safe to drive. The driver can then be alerted if the load has suddenly moved and perform a controlled manoeuvre to come to a stop and re-access the load being towed.

The height thresholds may be established in relation to the characteristics of the trailer being carried. For example, the thresholds may be set larger as the length and/or weight capacity of the trailer increases. Similarly, the thresholds may be set smaller as the length and/or weight capacity of the trailer decreases. The association of the threshold to the characteristics of the trailer allows the trailer load to be accurately assessed, especially when towing long trailers, which have the potential to carry heavier loads.

It is also appreciated that thresholds may be set according to the location of the cameras 104,106 on the body of the vehicle and/or their longitudinal separation. As such, the first threshold which is associated to the rear facing image capturing device can be different than the second threshold which is associated to the front facing image capturing device.

Further thresholds can also be set as a function of the heights of both the cameras, for example, a ratio of a height of one camera relative to another exceeding a threshold can also indicate incorrect trailer loading.

Figure 1 depicts a loading configuration in which the trailer load 202 is in the correct location, making the load easy, efficient and safe to tow. In this configuration, the distance of the rear image capturing device 104 is inside a first threshold, and the distance of the front image capturing device 106 is also inside a second threshold. In addition, or alternatively, any function based on a combination of the distances of the front and rear image capturing devices from the ground also lies within a respective threshold. Accordingly, the processor 110 determines that the trailer is safe to tow.

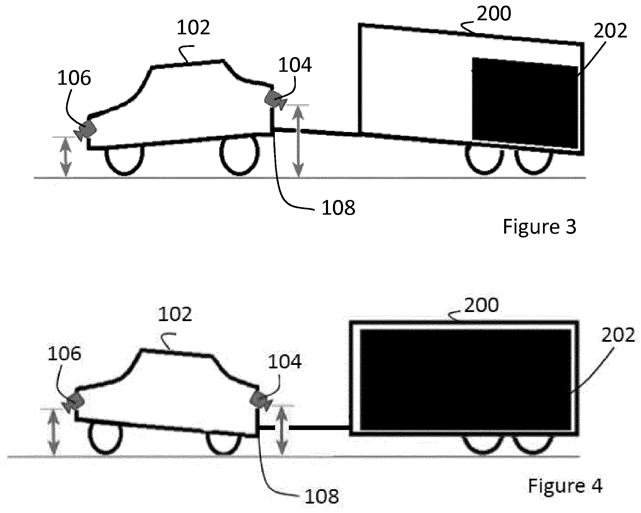

Figures 2 and 3 show exemplary configuration in which the trailer 200 is not safe to tow because trailer load 202 is in an incorrect location and thus the load weight 202 is unevenly dispersed. In Figures 2 and 3 the image capturing device distance from the ground will increase largely on the front and decrease largely on the back and vice-versa based on whether the trailer is overloaded at the front or rear.

In the loading configuration shown in Figure 2, the load 202 is too far forward in the trailer 200 causing the front of the trailer 200 and consequently the hitching point 108 of the car to be dipped towards the ground. In this configuration the back of the vehicle is closer to the surface on which the vehicle lies than when the load weight is evenly dispersed as show in Figure 1. Consequently, distance of the rear facing image capturing device 104 from a surface on which the vehicle lies decreases largely on the back. In Figure 2 the distance of the rear image capturing device 104 from the ground is below a first threshold. On the contrary, the distance between the front of the vehicle 102 and the surface on which the vehicle lies is increased largely with respect to when the load weight is evenly dispersed as show in Figure 1 and it is above a second threshold. In addition, or alternatively, a ratio of the distance of the front image capturing device to the ground and the rear image capturing device to the ground exceeds a given threshold. Accordingly, the processor 110 determines that the trailer is not safe to tow because the balance of the weight from front to back of the trailer 200 is not proportionally correct and, therefore, the load weight is distributed incorrectly.

As indicated, it will be appreciated that such a determination could also be made as a function of the ratio of the respective heights of the front and rear facing image capturing devices from the ground.

In the loading configuration shown in Figure 3, the load 202 is closer to the back of the trailer 200. The front part of the trailer acts on the hitching point 108 of the car causing the front of the trailer 200 and hitching point 108 of the car 102 to rise up from the ground. In this configuration the distance between the back of the vehicle and the surface on which the vehicle lies is increased relative to when the load weight is evenly dispersed as shown in Figure 1. On the contrary, the distance between the front of the vehicle and the surface on which the vehicle lies is decreased with respect to when the load weight is evenly dispersed as shown in Figure 1. In addition, or alternatively, a ratio of the distance of the rear image capturing device to the ground and the front image capturing device to the ground exceeds a given threshold. Accordingly, the processor 110 determines that the trailer is not safe to tow because the balance of the weight from front to back of the trailer 200 is not proportionally correct and, therefore, the load weight is distributed incorrectly.

Figure 4 depicts an alternative loading configuration wherein the trailer 200 is overloaded causing the trailer to be positioned closer to the ground throughout. In this configuration, similar to Figure 2, the movement of the trailer with respect to the ground causes the hitching point of the car to be dipped towards the ground and for the distance between the front of the vehicle and the surface on which the vehicle lies to increase. In this case, while the height of the rear image capturing device 104 may be below its respective threshold, the height of the front image capturing device 106 or the ratio of the height of the front image capturing device to the height of the rear image capturing device may not exceed their threshold to the same extent as in Figure 2. Nonetheless in this case, the processor 110 may determine that the trailer is not safe to tow because the trailer is overloaded.

As will be appreciated, the processor 110 may provide the indications determined above as preliminary indicators to be combined with other indicators before advising a user of the vehicle that the trailer is not safe to tow; or the indications may lead directly to a warning to the user of the vehicle. So, for example, the processor 110 may combine a measure of engine load with image capturing device height information to distinguish between the loading state of Figure 2 and that of Figure 4.

## Claims

1. A method operable in a towing vehicle for determining a state of a trailer being towed by said towing vehicle, the vehicle comprising a front facing and a rear facing image capturing device, the method comprising:
determining respective distances of the rear facing image capturing device and the front facing image capturing device from a surface on which the vehicle lies;
responsive to one or both of: the distance of the rear image capturing device being outside a first threshold, and the distance of the front image capturing device being outside a second threshold, outputting a value indicative the state of the towed trailer.

2. A method according to claim 1 comprising repeatedly performing said steps as a vehicle is in motion.

3. A method according to claim 1, the method being responsive to said distance of the rear image capturing device being below said first threshold, to indicate a trailer is either front loaded or overloaded.

4. A method according to claim 1, the method being responsive to said distance of the front image capturing device being above said second threshold, to indicate a trailer is front loaded.

5. A method according to claim 1, the method being responsive to a ratio of said distance of the front image capturing device to said distance of said rear image capturing device being above a threshold, to indicate a trailer is front loaded.

6. A method according to claim 1, the method being responsive to said distance of the rear image capturing device being above said first threshold, to indicate a trailer is rear loaded.

7. A method according to claim 1, the method being responsive to said distance of the front image capturing device being below said second threshold, to indicate a trailer is rear loaded.

8. A method according to claim 1, the method being responsive to a ratio of said distance of the rear image capturing device to said distance of said front image capturing device being above a threshold, to indicate a trailer is rear loaded.

9. A computer program product comprising a computer readable medium on which executable instructions are stored, which when executed on a processing device are arranged to perform the steps of claim 1.

10. A weight distribution determination system for a towing vehicle, the weight distribution determination system comprising:
a front and a rear image capturing device; and
a processor operatively connected to said image capturing devices and configured to perform the method of claim 1.

11. A system according to claim 10 wherein said image capturing devices comprise either visible or non-visible light imaging devices.

12. A system according to claim 10 wherein said processor is configured to process either chromatic or intensity image information obtained from said image capturing devices.

13. A system according to claim 10 wherein said processor is further configured to obtain odometry information from a vehicle system bus to determine said respective distances of the rear facing image capturing device and the front facing image capturing device from the surface on which the vehicle lies

14. A vehicle comprising the weight distribution determination system of claim 10.

15. A vehicle according to claim 14 wherein said front and rear facing image capturing devices are longitudinally separated from one another.

## Patentansprüche

1. Verfahren, das in einem Zugfahrzeug betreibbar ist, zum Bestimmen eines Zustands eines durch das Zugfahrzeug gezogenen Anhängers, wobei das Fahrzeug eine nach vorne gerichtete und eine nach hinten gerichtete Bilderfassungsvorrichtung umfasst, wobei das Verfahren umfasst:
Bestimmen der jeweiligen Entfernung der nach hinten gerichteten Bilderfassungsvorrichtung und der nach vorne gerichteten Bilderfassungsvorrichtung von einer Fläche, auf der das Fahrzeug steht;
in Reaktion auf eines oder beides von: außerhalb eines ersten Schwellenwertes liegenden Entfernung der hinteren Bilderfassungsvorrichtung und außerhalb eines zweiten Schwellenwertes liegenden Entfernung der vorderen Bilderfassungsvorrichtung Ausgeben eines Wertes, der den Zustand des gezogenen Anhängers anzeigt.

2. Verfahren gemäß Anspruch 1, umfassend das wiederholte Durchführen der Schritte, während sich ein Fahrzeug in Bewegung befindet.

3. Verfahren gemäß Anspruch 1, wobei das Verfahren darauf reagiert, dass die Entfernung der hinteren Bilderfassungsvorrichtung unterhalb des ersten Schwellenwertes liegt, um anzuzeigen, dass ein Anhänger entweder frontbeladen oder überladen ist.

4. Verfahren gemäß Anspruch 1, wobei das Verfahren darauf reagiert, dass die Entfernung der vorderen Bilderfassungsvorrichtung oberhalb des zweiten Schwellenwertes liegt, um anzuzeigen, dass ein Anhänger frontbeladen ist.

5. Verfahren gemäß Anspruch 1, wobei das Verfahren darauf reagiert, dass ein Verhältnis der Entfernung der vorderen Bilderfassungsvorrichtung zur Entfernung der hinteren Bilderfassungsvorrichtung oberhalb eines Schwellenwertes liegt, um anzuzeigen, dass ein Anhänger frontbeladen ist.

6. Verfahren gemäß Anspruch 1, wobei das Verfahren darauf reagiert, dass die Entfernung der hinteren Bilderfassungsvorrichtung oberhalb des ersten Schwellenwertes liegt, um anzuzeigen, dass ein Anhänger heckbeladen ist.

7. Verfahren gemäß Anspruch 1, wobei das Verfahren darauf reagiert, dass die Entfernung der vorderen Bilderfassungsvorrichtung unterhalb des zweiten Schwellenwertes liegt, um anzuzeigen, dass ein Anhänger heckbeladen ist.

8. Verfahren gemäß Anspruch 1, wobei das Verfahren darauf reagiert, dass ein Verhältnis der Entfernung der hinteren Bilderfassungsvorrichtung zur Entfernung der vorderen Bilderfassungsvorrichtung oberhalb eines Schwellenwertes liegt, um anzuzeigen, dass ein Anhänger heckbeladen ist.

9. Computerprogrammprodukt, umfassend ein computerlesbares Medium, auf dem ausführbare Anweisungen gespeichert sind, die beim Ausführen auf einer Verarbeitungsvorrichtung dazu eingerichtet sind, die Schritte gemäß Anspruch 1 durchzuführen.

10. System zur Bestimmung der Gewichtsverteilung für ein Zugfahrzeug, wobei das System zur Bestimmung der Gewichtsverteilung umfasst:
eine vordere und eine hintere Bilderfassungsvorrichtung; und
einen Prozessor, der betriebsfähig mit den Bilderfassungsvorrichtungen verbunden und dazu ausgelegt ist, das Verfahren gemäß Anspruch 1 durchzuführen.

11. System gemäß Anspruch 10, wobei die Bilderfassungsvorrichtungen Bildaufnahmevorrichtungen entweder für sichtbares oder nicht sichtbares Licht umfassen.

12. System gemäß Anspruch 10, wobei der Prozessor dazu ausgelegt ist, entweder Farb- oder Intensitätsbildinformationen zu verarbeiten, die aus den Bilderfassungsvorrichtungen erhalten werden.

13. System gemäß Anspruch 10, wobei der Prozessor ferner dazu ausgelegt ist, Odometrieinformationen aus einem Fahrzeugsystembus zu erhalten, um die jeweilige Entfernung der nach hinten gerichteten Bilderfassungsvorrichtung und der nach vorne gerichteten Bilderfassungsvorrichtung von der Fläche, auf der das Fahrzeug steht, zu bestimmen.

14. Fahrzeug, umfassend das System zur Bestimmung der Gewichtsverteilung gemäß Anspruch 10.

15. Fahrzeug gemäß Anspruch 14, wobei die nach vorne und nach hinten gerichtete Bilderfassungsvorrichtung in Längsrichtung voneinander getrennt sind.

## Revendications

1. Procédé utilisable dans un véhicule tracteur pour déterminer un état d'une remorque qui est tractée par ledit véhicule tracteur, le véhicule comportant un dispositif de capture d'images orienté vers l'avant et un orienté vers l'arrière, le procédé comportant les étapes consistant à :
déterminer des distances respectives du dispositif de capture d'images orienté vers l'arrière et du dispositif de capture d'images orienté vers l'avant par rapport à une surface sur laquelle repose le véhicule ;
en réaction au fait que : la distance du dispositif arrière de capture d'images se trouve en dehors d'un premier seuil, et/ou que la distance du dispositif avant de capture d'images se trouve en dehors d'un second seuil, délivrer une valeur indicative de l'état de la remorque tractée.

2. Procédé selon la revendication 1, comportant la réalisation répétée desdites étapes tandis qu'un véhicule est en mouvement.

3. Procédé selon la revendication 1, le procédé consistant, en réaction au fait que ladite distance du dispositif arrière de capture d'images soit inférieure audit premier seuil, à indiquer qu'une remorque est soit chargée sur l'avant, soit surchargée.

4. Procédé selon la revendication 1, le procédé consistant, en réaction au fait que ladite distance du dispositif avant de capture d'images soit supérieure audit second seuil, à indiquer qu'une remorque est chargée sur l'avant.

5. Procédé selon la revendication 1, le procédé consistant, en réaction au fait qu'un rapport de ladite distance du dispositif avant de capture d'images à ladite distance dudit dispositif arrière de capture d'images soit supérieur à un seuil, à indiquer qu'une remorque est chargée sur l'avant.

6. Procédé selon la revendication 1, le procédé consistant, en réaction au fait que ladite distance du dispositif arrière de capture d'images soit supérieure audit premier seuil, à indiquer qu'une remorque est chargée sur l'arrière.

7. Procédé selon la revendication 1, le procédé consistant, en réaction au fait que ladite distance du dispositif avant de capture d'images soit inférieure audit second seuil, à indiquer qu'une remorque est chargée sur l'arrière.

8. Procédé selon la revendication 1, le procédé consistant, en réaction au fait qu'un rapport de ladite distance du dispositif arrière de capture d'images à ladite distance dudit dispositif avant de capture d'images soit supérieur à un seuil, à indiquer qu'une remorque est chargée sur l'arrière.

9. Produit de programme d'ordinateur comportant un support lisible par ordinateur sur lequel sont stockées des instructions exécutables qui, lorsqu'elles sont exécutées sur un dispositif de traitement, sont agencées pour réaliser les étapes de la revendication 1.

10. Système de détermination de répartition de poids destiné à un véhicule tracteur, le système de détermination de répartition de poids comportant :
un dispositif avant et un dispositif arrière de capture d'images ; et
un processeur relié fonctionnellement auxdits dispositifs de capture d'images et configuré pour réaliser le procédé de la revendication 1.

11. Système selon la revendication 10, lesdits dispositifs de capture d'images constituant des dispositifs d'imagerie soit en lumière visible, soit en lumière non visible.

12. Système selon la revendication 10, ledit processeur étant configuré pour traiter des informations d'images, soit chromatiques soit d'intensité, obtenues à partir desdits dispositifs de capture d'images.

13. Système selon la revendication 10, ledit processeur étant en outre configuré pour obtenir des information d'odométrie à partir d'un bus de système du véhicule pour déterminer lesdites distances respectives du dispositif de capture d'images orienté vers l'arrière et du dispositif de capture d'images orienté vers l'avant par rapport à la surface sur laquelle repose le véhicule.

14. Véhicule comportant le système de détermination de répartition de poids selon la revendication 10.

15. Véhicule selon la revendication 14, lesdits dispositifs de capture d'images orientés vers l'avant et l'arrière étant séparés longitudinalement l'un de l'autre.
